# EUROPEAN PATENT APPLICATION

(11) **EP 4 435 303 A1**
(43) Date of publication of application: **25.09.2024**
(21) Application number: 22892565.7
(22) Date of filing: 24.10.2022
(51) Int. Cl.: F16K 31/04, F25B 41/35

(54) **ELECTRIC VALVE CONTROL DEVICE AND ELECTRIC VALVE DEVICE**

(30) Priority: 15.11.2021 JP 2021185917
(71) Applicant: Fujikoki Corporation, Tokyo 158-0082 (JP)
(72) Inventor: OGIWARA, Kai, Tokyo 158-0082 (JP); HAGIMOTO, Hiroshi, Tokyo 158-0082 (JP)
(74) Representative: Ter Meer Steinmeister & Partner
(86) International application number: PCT/JP2022/039504
(87) International publication number: WO 2023/085065

(57) **Abstract**

[Object] To provide an electric valve control device capable of returning the electric valve from a locked state to a normal state and an electric valve device.

[Solution] An electric valve control device (70) includes a computer (80) configured to control a stepping motor (66) of an electric valve (5). Upon detection of an out-of-step state of the stepping motor (66) when the stepping motor (66) is controlled to rotate a rotor (41) in a first direction for changing a valve opening degree of the electric valve (5), the computer (80) is configured to control the stepping motor (66) to rotate the rotor (41) in a second direction opposite to the first direction.

## Description

### Technical Field

The present invention relates to an electric valve control device, and an electric valve device including the electric valve control device.

### Background Art

Patent Literature 1 discloses an example of an electric valve device according to the related art. The electric valve device includes an electric valve and an electric valve control device. The electric valve is installed in a refrigeration cycle system of an air conditioner. The electric valve includes a valve body, a valve member, and a stepping motor for moving the valve member. The stepping motor includes a rotor and a stator. The stepping motor is connected to a motor driver of the electric valve control device. When pulses are input to the motor driver, the motor driver supplies driving current corresponding to pulses to the stator to rotate the rotor. The electric valve includes a driving mechanism that moves the valve member by using the rotation of the rotor. The valve member moves along with the rotation of the rotor, changing the valve opening degree of the electric valve.

The electric valve control device controls the electric valve. The electric valve control device changes the valve opening degree of the electric valve within a range from the minimum opening degree to the maximum opening degree. When the electric valve control device receives, from an air conditioner control device, an instruction for changing the valve opening degree that includes a target valve-opening degree of the electric valve, the electric valve control device inputs the number of pulses calculated based on the target valve-opening degree to the motor driver. As a result, the valve opening degree of the electric valve is changed to the target valve-opening degree.

### Citation List

### Patent Literature

Patent Literature 1: WO2019/130928

### Summary of Invention

### Technical Problem

Foreign matter may be included in refrigerant used in the refrigerant cycle system and enter the driving mechanism of the electric valve. This may result in the stepping motor entering an out-of-step state or cause the electric valve to transition from a normal state, where the rotor can rotate, to a locked state, where the rotor cannot rotate. If the electric valve stays in the locked state, the flow rate of the refrigerant is uncontrollable.

Accordingly, it is an object of the present invention to provide an electric valve control device capable of returning an electric valve from a locked state to a normal state and an electric valve device including the electric valve control device.

### Solution to Problem

To achieve the object above, an electric valve control device according to an aspect of the present invention is an electric valve control device for controlling an electric valve. The electric valve includes a valve member, a stepping motor, and a driving mechanism that moves the valve member along with rotation of a rotor of the stepping motor. The electric valve control device includes a controller configured to control the stepping motor. Upon detection of an out-of-step state of the stepping motor when the stepping motor is controlled to rotate the rotor in a first direction for changing a valve opening degree of the electric valve, (A) the controller is configured to control the stepping motor to rotate the rotor in a second direction opposite to the first direction.

According to the present invention, upon detection of the out-of-step state of the stepping motor when the stepping motor is controlled to rotate the rotor in the first direction, (A) the electric valve control device controls the stepping motor to rotate the rotor in the second direction opposite to the first direction. With this configuration, reversing a rotational direction of the rotor reverses motion directions of members of the driving mechanism, which enables the ejection of foreign matter from the driving mechanism. As a result, it is possible to return the electric valve from a locked state, where the rotor cannot rotate, to a normal state, where the rotor can rotate.

In the present invention, preferably, (B) the controller is configured to increase torque of the stepping motor and control the stepping motor to rotate the rotor in the second direction when the rotor fails to rotate in the second direction even though the stepping motor is controlled to rotate the rotor in the second direction. With this configuration, increasing the torque of the stepping motor and rotating the rotor in the second direction enable more effective ejection of foreign matter from the driving mechanism.

In the present invention, preferably, (C) the controller is configured to further increase the torque and control the stepping motor to rotate the rotor in the first direction when the rotor fails to rotate in the second direction even though the torque is increased and the stepping motor is controlled to rotate the rotor in the second direction. With this configuration, further increasing the torque of the stepping motor and reversing the rotational direction of the rotor enable more effective ejection of foreign matter from the driving mechanism.

In the present invention, preferably, the controller is configured to end operations (A), (B), and (C) and control the stepping motor to position the rotor at a reference position when the rotor rotates during any of the operations (A), (B), and (C). With this configuration, positioning the rotor at the reference position after the electric valve returns from the locked state to the normal state resolves the out-of-step state of the stepping motor.

In the present invention, preferably, the controller is configured to repeat the operations (A), (B), and (C). Preferably, the controller is configured to end the operations (A), (B), and (C) when a predetermined number of repetitions of the operations (A), (B), and (C) are completed. With this configuration, repeating the operations (A), (B), and (C) increases the possibility of returning the electric valve to the normal state. Additionally, the operations (A), (B), and (C) are ended when the electric valve fails to return to the normal state even though the predetermined number of repetitions of the operations (A), (B), and (C) are completed. This inhibits the operations for returning the electric valve to the normal state from being prolonged.

In the present invention, preferably, the controller is configured to increase the torque based on an increase in driving current supplied to the stepping motor. Preferably, the controller is configured to repeat the operations (A), (B), and (C). Preferably, the controller is configured to end the operations (A), (B), and (C) when the driving current is greater than a current upper-limit threshold. With this configuration, repeating the operations (A), (B), and (C) increases the possibility of returning the electric valve to the normal state. Additionally, the operations (A), (B), and (C) are ended when the driving current supplied to the stepping motor is greater than the current upper-limit threshold. This inhibits the operations for returning the electric valve to the normal state from being prolonged.

In the present invention, preferably, the controller is configured to increase the torque based on a reduction in rotational speed of the rotor. Preferably, the controller is configured to repeat the operations (A), (B), and (C). Preferably, the controller is configured to end the operations (A), (B), and (C) when the rotational speed is less than or equal to a speed lower-limit threshold. With this configuration, repeating the operations (A), (B), and (C) increases the possibility of returning the electric valve to the normal state. Additionally, the operations (A), (B), and (C) are ended when the rotational speed of the rotor is less than or equal to the speed lower-limit threshold. This inhibits the operations for returning the electric valve to the normal state from being prolonged.

In the present invention, preferably, (B1) the controller is configured to maximize driving current supplied to the stepping motor and control the stepping motor to rotate the rotor in the second direction when the rotor fails to rotate in the second direction even though the stepping motor is controlled to rotate the rotor in the second direction. With this configuration, maximizing the driving current supplied to the stepping motor to increase torque of the stepping motor and rotating the rotor in the second direction enable more effective ejection of foreign matter from the driving mechanism.

In the present invention, preferably, (C1) the controller is configured to maximize the driving current and control the stepping motor to rotate the rotor in the first direction when the rotor fails to rotate in the second direction even though the driving current is maximized and the stepping motor is controlled to rotate the rotor in the second direction. With this configuration, maximizing the driving current supplied to the stepping motor to increase the torque and reversing the rotational direction of the rotor enable more effective ejection of foreign matter from the driving mechanism.

To achieve the object above, an electric valve device according to another aspect of the present invention is an electric valve device including an electric valve that includes a valve member, a stepping motor, and a driving mechanism that moves the valve member along with rotation of a rotor of the stepping motor, and the electric valve control device. According to the present invention, the electric valve control device is included, which enables the ejection of foreign matter from the driving mechanism. As a result, it is possible to return the electric valve from the locked state to the normal state.

### Advantageous Effects of Invention

According to the present invention, it is possible to return the electric valve from the locked state to the normal state.

### Brief Description of Drawings

[Fig. 1] Fig. 1 is a block diagram of an air conditioning system including an electric valve device according to an embodiment of the present invention.
[Fig. 2] Fig. 2 is a sectional view of the electric valve device in Fig. 1.
[Fig. 3] Fig. 3 is a plan view of a valve stem holder, a stopper member, a rotor, and a stator of the electric valve device in Fig. 1.
[Fig. 4] Fig. 4 is a diagram illustrating a computer, a motor driver, and a stepping motor of the electric valve device in Fig. 1.
[Fig. 5] Fig. 5 is a flowchart illustrating an example of a process executed by the computer of the electric valve device in Fig. 1.
[Fig. 6] Fig. 6 is a flowchart illustrating the example of the process executed by the computer of the electric valve device in Fig. 1 (following the flowchart in Fig. 5). Description of Embodiments

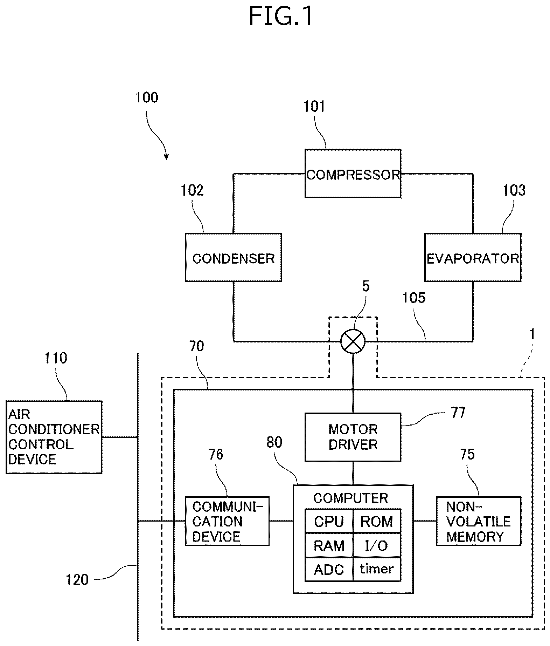

The configuration of an electric valve device according to an embodiment of the present invention is described below with reference to Fig. 1 to Fig. 4. An electric valve device 1 according to the embodiment is used as, for example, a flow control valve for controlling the flow rate of refrigerant in a refrigeration cycle system of an air conditioner.

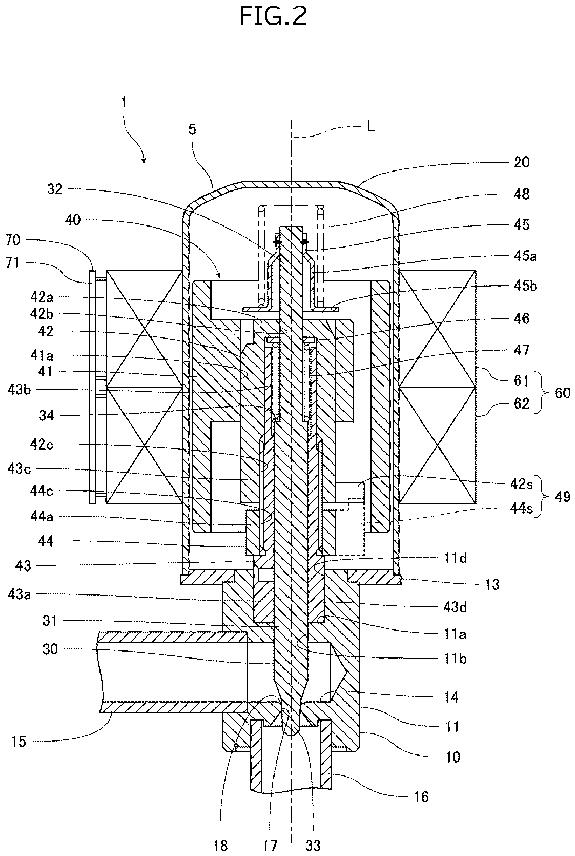

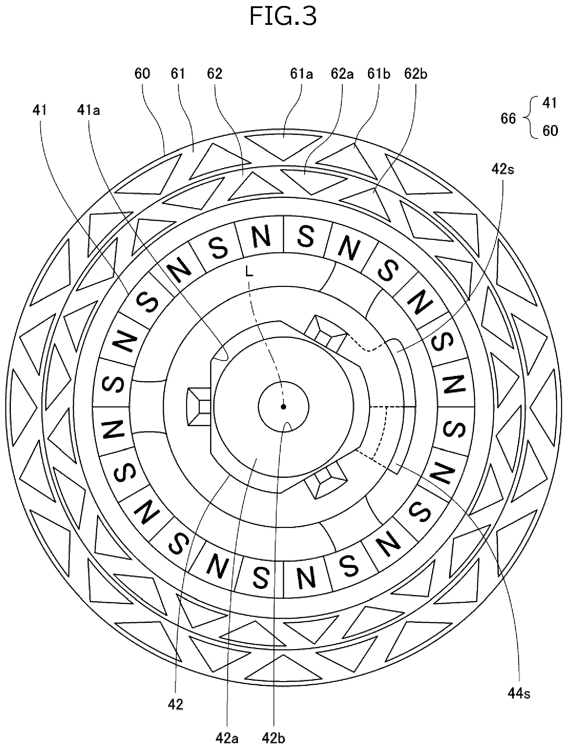

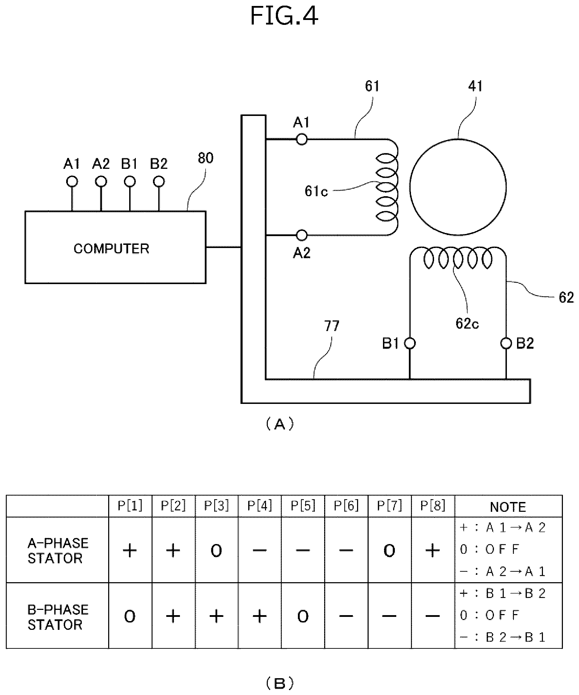

Fig. 1 is a block diagram of an air conditioning system including the electric valve device according to the embodiment of the present invention. Fig. 2 is a sectional view of the electric valve device in Fig. 1. Fig. 2 schematically illustrates a stator and an electric valve control device. In Fig. 2, illustration of a housing that contains the stator and the electric valve control device is omitted. Fig. 3 is a plan view of a valve stem holder, a stopper member, a rotor, and the stator of the electric valve device in Fig. 1. Fig. 3 schematically illustrates the stator and magnetic poles of the rotor. Fig. 4 is a diagram illustrating a computer, a motor driver, and a stepping motor of the electric valve device in Fig. 1. Fig. 4A schematically illustrates connections among the computer, the motor driver, and the stepping motor. Fig. 4B shows an example of correspondence between pulses and driving currents supplied to the stator by the motor driver.

Fig. 1 illustrates an example of an air conditioning system 100 mounted in a vehicle. The air conditioning system 100 includes a compressor 101, a condenser 102, the electric valve device 1 (an electric valve 5), and an evaporator 103, which are connected in this order by a pipe 105. The electric valve device 1 functions as an expansion valve. The air conditioning system 100 includes an air conditioner control device 110. The air conditioner control device 110 is connected to the electric valve device 1 and is able to communicate with the electric valve device 1. The air conditioner control device 110 uses the electric valve device 1 to control the flow rate of refrigerant flowing through the pipe 105.

As illustrated in Fig. 2, the electric valve device 1 includes the electric valve 5 and an electric valve control device 70.

The electric valve 5 includes a valve body 10, a can 20, a valve member 30, a driving mechanism 40, a rotor 41, and a stator 60.

The valve body 10 includes a body member 11 and a connection member 13. The body member 11 has a circular columnar shape. The body member 11 has a valve chamber 14. A first conduit 15 and a second conduit 16 are bonded to the body member 11. The first conduit 15 is disposed in a direction perpendicular to an axis L (a lateral direction in Fig. 2) and is connected to the valve chamber 14. The second conduit 16 is disposed in a direction of the axis L (an up-and-down direction in Fig. 2) and is connected to the valve chamber 14 via a valve port 17. The valve port 17 is enclosed by a valve seat 18, which has a circular annular shape, in the valve chamber 14. The body member 11 has a fitting hole 11a, which has a circular shape. The fitting hole 11a is provided on the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has an annular plate-like shape. The inner circumferential edge of the connection member 13 is bonded to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, and a valve portion 33. The first stem portion 31 has a circular columnar shape. The second stem portion 32 has a circular columnar shape. The diameter of the second stem portion 32 is smaller than that of the first stem portion 31. The second stem portion 32 is provided coaxially and continuously with the upper end of the first stem portion 31. The valve member 30 has a step portion 34. The step portion 34 is an annular plane facing upward. The step portion 34 is disposed in the part where the second stem portion 32 is continuous with the first stem portion 31. The valve portion 33 has a conical shape with a diameter decreasing from top to bottom. The valve portion 33 is provided coaxially and continuously with the lower end of the first stem portion 31. The valve portion 33 is disposed in the valve port 17. A variable throttle passage is formed between the valve portion 33 and the valve port 17. The valve portion 33 faces the valve seat 18. The valve port 17 is closed when the valve portion 33 is in contact with the valve seat 18.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged at regular angular intervals in the circumferential direction. In the electric valve device 1, the rotor 41 has 12 N poles and 12 S poles for example. The angle between the N pole and the S pole adjacent to each other is 15 degrees.

The driving mechanism 40 moves the valve member 30 in the up-and-down direction (the direction of the axis L). The movement of the valve member 30 changes the opening degree of the valve port 17 (i.e., the valve opening degree of the electric valve 5). The driving mechanism 40 includes a valve stem holder 42, a guide bush 43, a stopper member 44, and a fixed member 45.

The valve stem holder 42 has a circular cylindrical shape. The valve stem holder 42 is open at the lower end and is closed at the upper end. The valve stem holder 42 is fitted into a fitting hole 41a of the rotor 41. The valve stem holder 42 rotates together with the rotor 41. A movable stopper 42s is disposed at the lower end of the outer circumferential surface of the valve stem holder 42. The movable stopper 42s is a protrusion radially extending outward from the outer circumferential surface of the valve stem holder 42. The valve stem holder 42 has a stem hole 42b. The stem hole 42b is provided in an upper wall portion 42a of the valve stem holder 42. The second stem portion 32 of the valve member 30 is disposed in the stem hole 42b movably in the direction of the axis L. The upper wall portion 42a of the valve stem holder 42 has a lower surface on which a washer 46 is disposed. A valve closing spring 47 is disposed between the washer 46 and the step portion 34 of the valve member 30. The valve closing spring 47 is a coil spring and pushes the valve member 30 toward the valve seat 18. The inner circumferential surface of the valve stem holder 42 has an internal thread 42c. The movable stopper 42s is fixed with respect to the rotor 41.

The guide bush 43 includes a base portion 43a and a support portion 43b. The base portion 43a has a circular cylindrical shape. The support portion 43b has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with that of the body member 11 on the axis L and allows the guide bush 43 to be appropriately positioned with respect to the body member 11 about the axis L. The outer diameter of the support portion 43b is smaller than that of the base portion 43a. The inner diameter of the support portion 43b is equal to that of the base portion 43a. The support portion 43b is provided coaxially and continuously with the upper end of the base portion 43a. The outer circumferential surface of the support portion 43b has an external thread 43c. The external thread 43c is screwed into the internal thread 42c of the valve stem holder 42. The valve stem holder 42 and the guide bush 43 constitute a thread mechanism that changes the rotation of the rotor 41 into a linear movement. The first stem portion 31 of the valve member 30 is disposed inside the guide bush 43. The guide bush 43 supports the valve member 30 movably in the direction of the axis L.

The stopper member 44 includes a stopper body 44a. The stopper body 44a has a circular cylindrical shape. The inner circumferential surface of the stopper body 44a has an internal thread 44c. A fixed stopper 44s is disposed on the outer circumferential surface of the stopper body 44a. The fixed stopper 44s is a protrusion radially extending outward from the outer circumferential surface of the stopper body 44a. The external thread 43c is screwed into the internal thread 44c until the stopper body 44a comes into contact with the base portion 43a of the guide bush 43, which fixes the stopper member 44 to the guide bush 43. The fixed stopper 44s is fixed with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is provided continuously with the lower end of the fixed portion 45a. A return spring 48 is disposed such that the return spring 48 encloses the fixed member 45. The return spring 48 is a coil spring. Note that the return spring 48 is not an essential member in the present invention.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point down, and the tip ends of the pole teeth 61b point up. The pole teeth 61a and the pole teeth 61b are alternately arranged at regular angular intervals in the circumferential direction. In the electric valve device 1, the A-phase stator 61 has 12 pole teeth 61a and 12 pole teeth 61b for example. The angle between the pole tooth 61a and the pole tooth 61b adjacent to each other is 15 degrees. When a coil 61c of the A-phase stator 61 is energized, the pole teeth 61a and the pole teeth 61b have opposite polarities.

The B-phase stator 62 includes a plurality of claw-pole type pole teeth 62a and 62b in the inner circumference. The tip ends of the pole teeth 62a point down, and the tip ends of the pole teeth 62b point up. The pole teeth 62a and the pole teeth 62b are alternately arranged at regular angular intervals in the circumferential direction. In the electric valve device 1, the B-phase stator 62 has 12 pole teeth 62a and 12 pole teeth 62b for example. The angle between the pole tooth 62a and the pole tooth 62b adjacent to each other is 15 degrees. When a coil 62c of the B-phase stator 62 is energized, the pole teeth 62a and the pole teeth 62b have opposite polarities.

The A-phase stator 61 is coaxially disposed on the B-phase stator 62. The A-phase stator 61 is in contact with the B-phase stator 62. When viewed in the direction of the axis L, the angle between the pole tooth 61a of the A-phase stator 61 and the pole tooth 62a of the B-phase stator 62 adjacent to each other is 7.5 degrees. In other words, the B-phase stator 62 is in a position where the B-phase stator 62 is rotated relatively to the A-phase stator 61 about the axis L by 7.5 degrees from the position where the pole tooth 61a and the pole tooth 62a are arranged in the direction of the axis L. As illustrated in Fig. 4A, terminals A1 and A2 of the coil 61c of the A-phase stator 61 and terminals B1 and B2 of the coil 62c of the B-phase stator 62 are connected to a motor driver 77 of the electric valve control device 70.

The can 20 is disposed inside the stator 60. The rotor 41 is disposed inside the can 20. The stator 60 and the rotor 41 are members of a stepping motor 66.

The rotor 41 is rotated by pulses P input to the stepping motor 66. Specifically, the rotor 41 is rotated by driving currents, corresponding to pulses P, supplied to the stator 60 of the stepping motor 66. In this specification, "inputting pulses P to the stepping motor 66" is synonymous with "supplying driving currents corresponding to pulses P to the stator 60 of the stepping motor 66".

Pulses P[1] to P[8] illustrated in Fig. 4B are input to the stepping motor 66 in order. The rate of pulses P is 125 pps in the electric valve device 1. The rate of pulses P may be 400 pps. The rate of pulses P is set as appropriate according to a system in which the electric valve device 1 is installed.

In rotating the rotor 41 in one direction (clockwise in Fig. 3), pulses P are cyclically input to the stepping motor 66 in ascending order (in the order from pulse P[1] to pulse P[8]). When the rotor 41 rotates in the one direction, the screw feed action of the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the valve portion 33 comes into contact with the valve seat 18. At this time, the rotor 41 is at a valve closing position Rc. When the rotor 41 at this position further rotates in the one direction, the valve closing spring 47 is compressed and the rotor 41 and the valve stem holder 42 further move downward. The valve member 30 does not move downward. When the movable stopper 42s of the valve stem holder 42 comes into contact with the fixed stopper 44s of the stopper member 44, the rotation of the rotor 41 in the one direction is restricted. At this time, the rotor 41 is at a reference position Rx. The movable stopper 42s and the fixed stopper 44s are members of a stopper mechanism 49 that restricts the rotor 41 from rotating in the one direction.

In rotating the rotor 41 in the other direction (counter clockwise in Fig. 3) opposite to the one direction, pulses P are cyclically input to the stepping motor 66 in descending order (in the order from pulse P[8] to pulse P[1]). When the rotor 41 rotates in the other direction, the screw feed action of the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. The rotor 41 is considered to be at a valve opening position Ro when a fluid flow rate at the valve port 17 reaches a predetermined value in a predetermined flow-rate measuring environment. The predetermined value is set as appropriate according to the configuration and application of the electric valve device 1.

When the rotor 41 rotates in the one direction, the valve port 17 is closed. When the rotor 41 rotates in the other direction, the valve port 17 opens. That is, the one direction is a valve closing direction, and the other direction is a valve opening direction.

The opening degree of the valve port 17 is related to the valve opening degree of the electric valve 5. The electric valve control device 70 controls the electric valve 5 such that the valve opening degree of the electric valve 5 is within a range from a minimum opening degree (0%) to a maximum opening degree (100%).

The minimum and maximum opening degrees of the valve opening degree used by the electric valve control device 70 for controlling the electric valve 5 are described. When the rotor 41 is at the position (the reference position Rx) where the rotation of the rotor 41 in the one direction is restricted by the stopper mechanism 49, the valve opening degree of the electric valve 5 is the minimum opening degree (0%). When the rotor 41 is at a position (a full-open position Rz) where the opening degree of the valve port 17 is equal to an opening degree allowing a flow of refrigerant having a flow rate that is 90% of a maximum flow rate (for example, a Cv value) of the electric valve 5, the valve opening degree of the electric valve 5 is the maximum opening degree (100%). The number of pulses required to rotate the rotor 41 from the reference position Rx to the full-open position Rz is 500.

The settings of the minimum and maximum opening degrees of the valve opening degree used by the electric valve control device 70 for controlling the electric valve 5 are not limited to those of the minimum and maximum opening degrees described above. For example, the minimum opening degree (0%) may be the valve opening degree of the electric valve 5 when the rotor 41 is at a position where the valve leakage amount of the electric valve 5 has reached a predetermined flow rate as the rotor 41 rotates in the valve opening direction from the valve closing position Rc. Alternatively, the minimum opening degree (0%) may be the valve opening degree of the electric valve 5 when the rotor 41 is at the valve closing position Rc or the valve opening position Ro. The maximum opening degree (100%) may be the valve opening degree of the electric valve 5 when the rotor 41 is at a position immediately before the internal thread 42c and the external thread 43c are unscrewed.

The electric valve control device 70 includes a circuit board 71 on which electronic components (not illustrated) are mounted. The circuit board 71 and the stator 60 are contained in a housing (not illustrated) made of a synthetic resin. As illustrated in Fig. 1, the electric valve control device 70 includes a non-volatile memory 75, a communication device 76, the motor driver 77, and a computer 80. The electric valve control device 70 controls the electric valve 5 according to an instruction received from the air conditioner control device 110.

The non-volatile memory 75 stores data required to be held even if power is turned off. The non-volatile memory 75 is, for example, EEPROM or flash memory.

The communication device 76 is connected to the air conditioner control device 110 via a wired communication bus 120 and is able to communicate with the air conditioner control device 110. The air conditioning system 100 utilizes a communication system such as Local Interconnection Network (LIN) or Controller Area Network (CAN). The communication device 76 may be wirelessly connected to the air conditioner control device 110 and be able to wirelessly communicate with the air conditioner control device 110.

The motor driver 77 supplies the driving currents to the stepping motor 66 based on pulses P input from the computer 80. As illustrated in Fig. 4A, the motor driver 77 is connected to the terminals A1 and A2 of the coil 61c of the A-phase stator 61 and the terminals B1 and B2 of the coil 62c of the B-phase stator 62. Fig. 4B illustrates an example of correspondence between pulses P and the driving currents supplied by the motor driver 77. In Fig. 4B, (+) denotes supplying the driving current flowing from the terminal A1 to the terminal A2 or the driving current flowing from the terminal B1 to the terminal B2. (-) denotes supplying the driving current flowing from the terminal A2 to the terminal A1 or the driving current flowing from the terminal B2 to the terminal B1. (0) denotes supplying no driving current.

The motor driver 77 supplies the driving current only to the coil 61c of the A-phase stator 61 when pulse P[1] or P[5] is input to the motor driver 77. The motor driver 77 supplies the driving current only to the coil 62c of the B-phase stator 62 when pulse P[3] or P[7] is input to the motor driver 77. The motor driver 77 supplies the driving currents to both the coil 61c of the A-phase stator 61 and the coil 62c of the B-phase stator 62 when pulse P[2], P[4], P[6], or P[8] is input to the motor driver 77.

The computer 80 is a microcomputer for embedded devices that incorporates a CPU, ROM, RAM, an input/output interface (I/O), an analog-to-digital converter (ADC), a timer, or the like in a single package. The computer 80 may incorporate the non-volatile memory 75, the communication device 76, and the motor driver 77. An external thermal sensor and/or an external analog-to-digital converter may be connected to the computer 80. The computer 80 is a controller.

The computer 80 controls the stepping motor 66. Specifically, the computer 80 inputs pulses P to the motor driver 77 to rotate the rotor 41.

The computer 80 obtains voltage generated in the stator 60 by the rotation of the rotor 41 (voltage induced in the stator 60 due to electromagnetic induction). Specifically, the computer 80 obtains the voltage VB generated between the terminals B1 and B2 of the coil 62c of the B-phase stator 62 when the motor driver 77 supplies the driving current only to the coil 61c of the A-phase stator 61 in response to pulses P[1] and P[5]. The computer 80 obtains the voltage VA generated between the terminals A1 and A2 of the coil 61c of the A-phase stator 61 when the motor driver 77 supplies the driving current only to the coil 62c of the B-phase stator 62 in response to pulses P[3] and P[7].

The waveforms of the voltages VA and VB when the stepping motor 66 is not in an out-of-step state are different from those of the voltages VA and VB when the stepping motor 66 is in the out-of-step state. The computer 80 determines, based on the voltages VA and VB, whether the stepping motor 66 is in the out-of-step state. The computer 80 detects, based on the voltages VA and VB, the out-of-step state of the stepping motor 66.

The waveforms of the voltages VA and VB when the rotor 41 rotates are different from those of the voltages VA and VB when the rotor 41 does not rotate. The computer 80 determines, based on the voltages VA and VB, whether the rotor 41 rotates. The computer 80 detects, based on the voltages VA and VB, the rotation of the rotor 41.

The electric valve 5 may include a permanent magnet that rotates together with the rotor 41, and the electric valve control device 70 may include a magnetic sensor for detecting the rotation of the permanent magnet. With this configuration, the computer 80 may determine, based on an output signal of the magnetic sensor, whether the stepping motor 66 is in the out-of-step state and whether the rotor 41 rotates.

The ROM of the computer 80 stores a program executed by the CPU and/or various setting values that do not require rewriting.

The RAM of the computer 80 is used as a working memory while the CPU executes the program. The R_AM of the computer 80 stores a present valve-opening degree Dc that indicates the valve-opening degree of the electric valve 5 at present. The present valve-opening degree Dc is copied from the R_AM to the non-volatile memory 75 when the electric valve control device 70 is powered off or enters a sleep mode. The present valve-opening degree Dc is copied from the non-volatile memory 75 to the R_AM when the electric valve control device 70 is powered on or returns from the sleep mode. The RAM of the computer 80 stores a counter value C1.

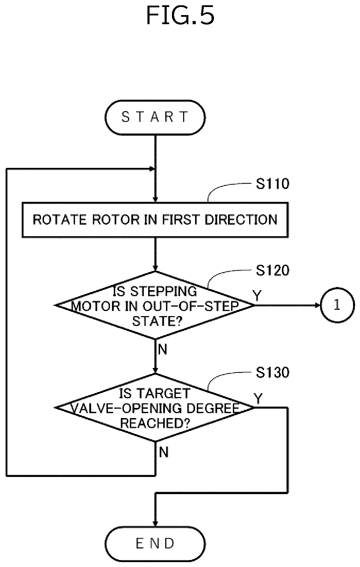

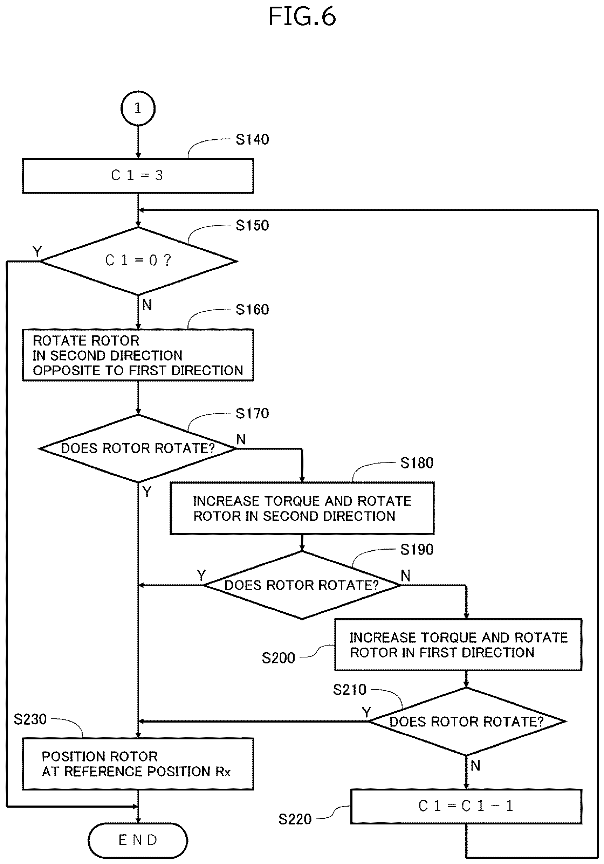

Next, an example of a process executed by the electric valve control device 70 is described below with reference to Fig. 5 and Fig. 6. Fig. 5 and Fig. 6 are flowcharts illustrating an example of a process executed by the computer of the electric valve device in Fig. 1.

The electric valve control device 70 (specifically, the computer 80) enters an operating mode when the electric valve control device 70 is powered on or returns from the sleep mode. In the operating mode, the electric valve control device 70 waits for an instruction from the air conditioner control device 110. The electric valve control device 70 executes the process illustrated in the flowcharts in Fig. 5 and Fig. 6 when receiving an instruction for changing the valve opening degree from the air conditioner control device 110. Hereinafter, the process is referred to as "a valve opening degree changing process". The instruction for changing the valve opening degree contains a target value (a target valve-opening degree Dt) of the valve opening degree of the electric valve 5.

The electric valve control device 70 rotates the rotor 41 to change the valve opening degree of the electric valve 5 (S110). Specifically, the electric valve control device 70 inputs pulses P to the motor driver 77 to control the stepping motor 66 such that the rotor 41 rotates. When the target valve-opening degree Dt is smaller than the present valve-opening degree Dc, the electric valve control device 70 inputs pulses P in ascending order to rotate the rotor 41 in the valve closing direction. When the target valve-opening degree Dt is greater than the present valve-opening degree Dc, the electric valve control device 70 input pulses P in descending order to rotate the rotor 41 in the valve opening direction. The rotational direction of the rotor 41 in this operation is referred to as "a first direction". In the valve opening degree changing process, the first direction is the rotational direction of the rotor 41 when the valve opening degree of the electric valve 5 is changed from the present valve-opening degree Dc to the target valve-opening degree Dt. When the target valve-opening degree Dt is smaller than the present valve-opening degree Dc, the valve closing direction is the first direction. When the target valve-opening degree Dt is greater than the present valve-opening degree Dc, the valve opening direction is the first direction.

The electric valve control device 70 determines whether the stepping motor 66 is in the out-of-step state. Specifically, the electric valve control device 70 determines, based on the voltages VA and VB, whether the stepping motor 66 is in the out-of-step state, while controlling the stepping motor 66 to rotate the rotor 41 in the first direction (S120). When the electric valve control device 70 determines that the stepping motor 66 is not in the out-of-step state (N in S120), and when the valve opening degree of the electric valve 5 does not reach the target valve-opening degree Dt (N in S130), the electric valve control device 70 continues inputting pulses P to the motor driver 77 to rotate the rotor 41 in the first direction (S110). When the valve opening degree of the electric valve 5 reaches the target valve-opening degree Dt (Y in S130), the electric valve control device 70 stores the target valve-opening degree Dt in the RAM as the present valve-opening degree Dc and ends the valve opening degree changing process.

When the electric valve control device 70 determines that the stepping motor 66 is in the out-of-step state (Y in S120), the electric valve control device 70 sets the counter value C1 to a repetition number for an operation (S150 to S220) for returning the electric valve 5 from a locked state, where the rotor 41 cannot rotate, to a normal state, where the rotor 41 can rotate (S140). In the embodiment, three is set to the counter value C1. The number set to the counter value C1 is set as appropriate according to the system in which the electric valve device 1 is installed.

When the counter value C1 is not equal to zero (N in S150), the electric valve control device 70 rotates the rotor 41 in a second direction opposite to the first direction (S160). Specifically, the electric valve control device 70 inputs pulses P to the motor driver 77 to control the stepping motor 66 such that the rotor 41 rotates in the second direction opposite to the first direction. The electric valve control device 70 determines, based on the voltages VA and VB, whether the rotor 41 rotates (S170).

When the electric valve control device 70 determines that the rotor 41 fails to rotate (N in S170), the electric valve control device 70 increases the torque of the stepping motor 66 and rotates the rotor 41 in the second direction (S180). Specifically, when the rotor 41 fails to rotate in the second direction even though the electric valve control device 70 controls the stepping motor 66 to rotate the rotor 41 in the second direction, the electric valve control device 70 increases the driving current supplied to the stepping motor 66. The electric valve control device 70 increases the driving current by a predetermined amount (for example, 50 mA) compared to the driving current supplied immediately before. Increasing the driving current increases the torque. The electric valve control device 70 inputs pulses P to the motor driver 77 to control the stepping motor 66 such that the rotor 41 rotates in the second direction. The electric valve control device 70 determines, based on the voltages VA and VB, whether the rotor 41 rotates (S190).

When the electric valve control device 70 determines that the rotor 41 fails to rotate (N in S190), the electric valve control device 70 increases the torque of the stepping motor 66 and rotates the rotor 41 in the first direction (S200). Specifically, when the rotor 41 fails to rotate in the second direction even though the electric valve control device 70 increases the driving current and controls the stepping motor 66 to rotate the rotor 41 in the second direction, the electric valve control device 70 further increases the driving current supplied to the stepping motor 66. The electric valve control device 70 increases the driving current by a predetermined amount (for example, 50 mA) compared to the driving current supplied immediately before. The electric valve control device 70 inputs pulses P to the motor driver 77 to control the stepping motor 66 such that the rotor 41 rotates in the first direction. The electric valve control device 70 determines, based on the voltages VA and VB, whether the rotor 41 rotates (S210).

Note that the electric valve control device 70 may, instead of increasing the driving current, reduce the rotational speed of the rotor 41 in step S180 and step S200. In this configuration, the electric valve control device 70 reduces the rotational speed by a predetermined amount (for example, 10 pps) compared to the rotational speed immediately before. Reducing the rotational speed increases the torque.

When the electric valve control device 70 determines that the rotor 41 fails to rotate (N in S210), the electric valve control device 70 decreases the counter value C1 by one (S220) and returns to the determination operation of the counter value C1 (S150).

When the electric valve control device 70 determines that the rotor 41 rotates (Y in S170, Y in S190, or Y in S210), the electric valve control device 70 positions the rotor 41 at the reference position Rx (S230). Specifically, the electric valve control device 70 initializes the amount of the driving current supplied to the stepping motor 66. The electric valve control device 70 inputs pulses P to the motor driver 77 to control the stepping motor 66 such that the rotor 41 rotates in the valve closing direction and positions the rotor 41 at the reference position Rx. For example, the electric valve control device 70 inputs, to the motor driver 77, the number of pulses P required to rotate the rotor 41 from the full-open position Rz to the reference position Rx. The electric valve control device 70 ends the valve opening degree changing process.

When the counter value C1 is equal to zero (Y in S150), the electric valve control device 70 determines that the electric valve 5 cannot return from the locked state to the normal state, sets a failure flag, and ends the valve opening degree changing process. When the failure flag is set, the electric valve control device 70 executes a process to be performed upon a failure of the electric valve 5. The process to be performed upon the failure of the electric valve is beyond the scope of the present invention and thus description thereof is not provided herein.

As described above, the electric valve device 1 according to the embodiment includes the electric valve 5 and the electric valve control device 70. The electric valve 5 includes the valve member 30, the stepping motor 66, and the driving mechanism 40 that moves the valve member 30 along with the rotation of the rotor 41 of the stepping motor 66. The electric valve control device 70 includes the computer 80 configured to control the stepping motor 66. Upon detection of the out-of-step state of the stepping motor 66 when the stepping motor 66 is controlled to rotate the rotor 41 in the first direction for changing the valve opening degree of the electric valve 5, (A) the computer 80 is configured to control the stepping motor 66 to rotate the rotor 41 in the second direction opposite to the first direction. With this configuration, reversing the rotational direction of the rotor 41 reverses the motion directions of members of the driving mechanism 40, which enables the ejection of foreign matter from the driving mechanism 40. As a result, it is possible to return the electric valve 5 from the locked state to the normal state.

(B) The computer 80 is configured to increase the torque of the stepping motor 66 and control the stepping motor 66 to rotate the rotor 41 in the second direction when the rotor 41 fails to rotate in the second direction even though the stepping motor 66 is controlled to rotate the rotor 41 in the second direction. With this configuration, the computer 80 increases the torque and rotates the rotor 41 in the second direction, which enables more effective ejection of foreign matter from the driving mechanism 40.

(C) The computer 80 is configured to further increase the torque and control the stepping motor 66 to rotate the rotor 41 in the first direction when the rotor 41 fails to rotate in the second direction even though the torque of the stepping motor 66 is increased and the stepping motor 66 is controlled to rotate the rotor 41 in the second direction. With this configuration, the computer 80 further increases the torque and reverses the rotational direction of the rotor 41, which enables more effective ejection of foreign matter from the driving mechanism 40.

The computer 80 is configured to end operations (A), (B), and (C) and control the stepping motor 66 to position the rotor 41 at the reference position Rx when the rotor 41 rotates during any of the operations (A), (B), and (C). With this configuration, the computer 80 positions the rotor 41 at the reference position Rx after the electric valve 5 returns from the locked state to the normal state, which resolves the out-of-step state of the stepping motor 66.

The computer 80 is configured to repeat the operations (A), (B), and (C). The computer 80 is configured to end the operations (A), (B), and (C) when a predetermined number of repetitions of the operations (A), (B), and (C) are completed. With this configuration, the computer 80 repeats the operations (A), (B), and (C), which increases the possibility of returning the electric valve 5 to the normal state. Additionally, the computer 80 ends the operations (A), (B), and (C) when the electric valve 5 fails to return to the normal state even though the predetermined number of repetitions of the operations (A), (B), and (C) are completed. This inhibits the operations for returning the electric valve 5 to the normal state from being prolonged.

In the embodiment described above, the computer 80 may be configured to increase the torque based on an increase in the driving current supplied to the stepping motor 66. The computer 80 may be configured to repeat the operations (A), (B), and (C), and the computer 80 may be configured to end the operations (A), (B), and (C) when the driving current is greater than a current upper-limit threshold (for example, 800 mA). With this configuration, the computer 80 repeats the operations (A), (B), and (C), which increases the possibility of returning the electric valve 5 to the normal state. Additionally, the computer 80 ends the operations (A), (B), and (C) when the driving current supplied to the stepping motor 66 is greater than the current upper-limit threshold. This inhibits the operations for returning the electric valve 5 to the normal state from being prolonged. The current upper-limit threshold is set based on the maximum current value that the motor driver 77 is capable of supplying to the stepping motor 66.

In the embodiment described above, the computer 80 may be configured to increase the torque based on a reduction in the rotational speed of the rotor 41. The computer 80 may be configured to repeat the operations (A), (B), and (C), and the computer 80 may be configured to end the operations (A), (B), and (C) when the rotational speed is less than or equal to a speed lower-limit threshold (for example, 0 pps). With this configuration, the computer 80 repeats the operations (A), (B), and (C), which increases the possibility of returning the electric valve 5 to the normal state. Additionally, the computer 80 ends the operations (A), (B), and (C) when the rotational speed of the rotor 41 is less than or equal to the speed lower-limit threshold. This inhibits the operations for returning the electric valve 5 to the normal state from being prolonged.

The embodiment described above may have a configuration in which, instead of the operation (B), (B1) the computer 80 is configured to maximize the driving current supplied to the stepping motor 66 and control the stepping motor 66 to rotate the rotor 41 in the second direction when the rotor 41 fails to rotate in the second direction even though the stepping motor 66 is controlled to rotate the rotor 41 in the second direction. With this configuration, the computer 80 maximizes the driving current supplied to the stepping motor 66 to increase the torque and rotates the rotor 41 in the second direction, which enables more effective ejection of foreign matter from the driving mechanism 40.

The embodiment described above may have a configuration in which, instead of the operation (C), (C1) the computer 80 is configured to maximize the driving current and control the stepping motor 66 to rotate the rotor 41 in the first direction when the rotor 41 fails to rotate in the second direction even though the driving current supplied to the stepping motor 66 is maximized and the stepping motor 66 is controlled to rotate the rotor 41 in the second direction. With this configuration, the computer 80 maximizes the driving current to increase the torque and reverses the rotational direction of the rotor 41, which enables more effective ejection of foreign matter from the driving mechanism 40. In the operations (B1) and (C1), the maximum value of the driving current is equal to the maximum current value that the motor driver 77 is capable of supplying to the stepping motor 66.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

### Reference Signs List

1 ... electric valve device, 5 ... electric valve, 10 ... valve body, 11 ... body member, 11a ... fitting hole, 11b ... through hole, 11d ... planar part, 13 ... connection member, 14 ... valve chamber, 15 ... first conduit,16 ... second conduit, 17 ... valve port, 18 ... valve seat, 20 ... can, 30 ... valve member, 31 ... first stem portion, 32 ... second stem portion, 33 ... valve portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... coil, 62 ... B-phase stator, 62a ... pole tooth, 62b ... pole tooth, 62c ... coil, 66 ... stepping motor, 70 ... electric valve control device, 71 ... circuit board, 75 ... non-volatile memory, 76 ... communication device, 77 ... motor driver, 80 ... computer, 100 ... air conditioning system, 101 ... compressor, 102 ... condenser, 103 ... evaporator, 105 ... pipe, 110 ... air conditioner control device, 120 ... wired communication bus, A1 ... terminal, A2 ... terminal, B1 ... terminal, B2... terminal, C1 ... counter value, L ... axis

## Claims

1. An electric valve control device for controlling an electric valve that includes a valve member, a stepping motor, and a driving mechanism that moves the valve member along with rotation of a rotor of the stepping motor,
the electric valve control device comprising a controller configured to control the stepping motor,
wherein upon detection of an out-of-step state of the stepping motor when the stepping motor is controlled to rotate the rotor in a first direction for changing a valve opening degree of the electric valve, (A) the controller is configured to control the stepping motor to rotate the rotor in a second direction opposite to the first direction.

2. The electric valve control device according to Claim 1,
wherein (B) the controller is configured to increase torque of the stepping motor and control the stepping motor to rotate the rotor in the second direction when the rotor fails to rotate in the second direction even though the stepping motor is controlled to rotate the rotor in the second direction.

3. The electric valve control device according to Claim 2,
wherein (C) the controller is configured to further increase the torque and control the stepping motor to rotate the rotor in the first direction when the rotor fails to rotate in the second direction even though the torque is increased and the stepping motor is controlled to rotate the rotor in the second direction.

4. The electric valve control device according to Claim 3,
wherein the controller is configured to end operations (A), (B), and (C) and control the stepping motor to position the rotor at a reference position when the rotor rotates during any of the operations (A), (B), and (C).

5. The electric valve control device according to Claim 4,
wherein the controller is configured to repeat the operations (A), (B), and (C), and
wherein the controller is configured to end the operations (A), (B), and (C) when a predetermined number of repetitions of the operations (A), (B), and (C) are completed.

6. The electric valve control device according to Claim 4 or Claim 5,
wherein the controller is configured to increase the torque based on an increase in driving current supplied to the stepping motor,
wherein the controller is configured to repeat the operations (A), (B), and (C), and
wherein the controller is configured to end the operations (A), (B), and (C) when the driving current is greater than a current upper-limit threshold.

7. The electric valve control device according to Claim 4 or Claim 5,
wherein the controller is configured to increase the torque based on a reduction in rotational speed of the rotor,
wherein the controller is configured to repeat the operations (A), (B), and (C), and
wherein the controller is configured to end the operations (A), (B), and (C) when the rotational speed is less than or equal to a speed lower-limit threshold.

8. The electric valve control device according to Claim 1,
wherein (B1) the controller is configured to maximize driving current supplied to the stepping motor and control the stepping motor to rotate the rotor in the second direction when the rotor fails to rotate in the second direction even though the stepping motor is controlled to rotate the rotor in the second direction.

9. The electric valve control device according to Claim 8,
wherein (C1) the controller is configured to maximize the driving current and control the stepping motor to rotate the rotor in the first direction when the rotor fails to rotate in the second direction even though the driving current is maximized and the stepping motor is controlled to rotate the rotor in the second direction.

10. An electric valve device comprising:
an electric valve that includes a valve member, a stepping motor, and a driving mechanism that moves the valve member along with rotation of a rotor of the stepping motor; and
the electric valve control device according to Claim 1.
